# FASCICULE DE BREVET EUROPEEN

(11) **EP 3 025 061 B1**
(45) Date de publication et mention de la délivrance du brevet: **10.10.2018**
(21) Numéro de dépôt: 14790135.9
(22) Date de dépôt: 11.07.2014
(51) Int. Cl.: F04D 7/02, F04D 13/04, F04D 29/041

(54) **POMPE CENTRIFUGE, EN PARTICULIER POUR L'ALIMENTATION DE MOTEURS DE FUSÉE**
KREISELPUMPE, INSBESONDERE ZUR VERSORGUNG VON RAKETENTRIEBWERKEN
CENTRIFUGAL PUMP, IN PARTICULAR FOR SUPPLYING ROCKET ENGINES

(30) Priorité: 22.07.2013 FR 1357205
(43) Date de publication de la demande: 01.06.2016
(73) Titulaire: ArianeGroup SAS, 75015 Paris (FR)
(72) Inventeur: DANGUY, François, F-27510 Tourny (FR); NGUYEN DUC, Jean-Michel, F-27700 Vezillon (FR); FABBRI, Laurent, F-27620 Gasny (FR); SENE, Cédric, F-76100 Rouen (FR)
(74) Mandataire: Calvo de Nó, Rodrigo
(86) Numéro de dépôt international: PCT/FR2014/051799
(87) Numéro de publication internationale: WO 2015/011366

(56) Documents cités:
- EP-A2- 0 410 948
- DE-C- 652 168
- FR-A1- 2 964 425
- US-A- 2 698 584
- US-A- 3 589 827
- US-A- 5 529 464

## Description

### Arrière-plan de l'invention

La présente invention concerne les pompes centrifuges, et en particulier les pompes centrifuges d'alimentation de chambres de combustion des moteurs fusées en propergols réducteurs et/ou oxydants, plus en particulier en propergols cryogéniques.

Des exemples de pompes centrifuges destinées à l'alimentation en propergols de chambres de combustion de moteur fusée ont été divulgués dans la demande de brevet français FR 2 964 425 A1 et dans le brevet US 5,529,464. Ces pompes centrifuges de l'état de la technique comprennent chacune un rouet, un arbre rotatif solidaire dudit rouet, un carter avec un passage axial d'admission, et au moins un palier soutenant ledit arbre rotatif dans ledit carter. Pour éviter des fuites en direction axiale entre le carter et l'arbre rotatif, ces pompes centrifuges comprennent aussi au moins un joint d'étanchéité dynamique autour de l'arbre rotatif, le rouet étant situé entre l'au moins un joint d'étanchéité dynamique et le passage axial d'admission. D'autres moyens de prévention de fuites ont été divulgués dans les brevets US 5 698 584 A et DE 652 168 C.

Typiquement, lors du fonctionnement d'une telle pompe centrifuge, son rouet exerce un effort axial important sur l'arbre rotatif dans le sens du passage axial d'admission de la pompe. Afin de soutenir la reprise de ces efforts par le ou les paliers de soutien de l'arbre rotatif, une solution ayant été proposée pour des pompes de l'état de la technique est celle d'intégrer au moins un piston d'équilibrage actif au dos du rouet. Toutefois, ce piston a l'inconvénient de présenter un encombrement important. D'autre part, si les paliers sont dimensionnés pour reprendre seuls cet effort considérable, ceci ne peut être aussi qu'en détriment de la compacité de l'ensemble. En outre, cette reprise d'efforts axiaux par les paliers peut dissiper une puissance importante.

Une autre solution ayant été envisagée pour compenser l'effort axial sur le rouet est l'ajout d'un flasque en tête des aubes du rouet de la pompe centrifuge. Cette solution est toutefois difficile à mettre en oeuvre, en particulier sur des rouets de petite taille.

### Objet et résumé de l'invention

La présente invention vise à remédier ces inconvénients, en particulier, cette divulgation vise à proposer une pompe centrifuge permettant d'obtenir un faible encombrement malgré la reprise des efforts axiaux du rouet.

Dans au moins un mode de réalisation, cette pompe centrifuge comprend au moins un rouet, un arbre rotatif solidaire dudit rouet, un carter avec un passage axial d'admission, au moins un premier palier soutenant ledit arbre rotatif dans ledit carter, et au moins un joint d'étanchéité dynamique autour de l'arbre rotatif, ledit rouet étant situé entre l'au moins un joint d'étanchéité dynamique et le passage axial d'admission de la pompe. Ladite reprise des efforts axiaux peut alors être obtenue, sans augmenter sensiblement l'encombrement global de la pompe centrifuge, grâce à un disque de compensation d'effort axial, solidaire de l'arbre, et présentant un diamètre supérieur à 70% d'un diamètre du rouet. Ce disque de compensation est situé entre le rouet et le joint d'étanchéité dynamique, avec une face avant orientée vers le rouet et reliée à une dérivation de fluide prélevé sous pression en aval de la pompe, et une face arrière orientée vers l'au moins un joint d'étanchéité dynamique et présentant des ailettes à orientation au moins partiellement radiale. Par « au moins partiellement radiale » on entend que cette orientation présente au moins une composante radiale. Quand le disque tourne avec l'arbre rotatif et le rouet de la pompe, ces ailettes du disque génèrent ainsi, par effet centrifuge, une chute de pression de la périphérie du disque à l'au moins un joint d'étanchéité dynamique, limitant ainsi les fuites de fluide pressurisé vers le joint d'étanchéité dynamique tout en assurant une surpression de la première face du disque par rapport à sa deuxième face, surpression servant à compenser l'effort axial transmis à l'arbre par le rouet. Des ailettes solidaires du carter, avec une orientation au moins partiellement radiale, en regard de la face avant du disque de compensation d'effort axial, servent à freiner la rotation du fluide avec la face avant du disque et limitent ainsi l'augmentation de pression statique sur la face avant vers la périphérie du disque.

Afin d'optimiser la distribution du matériau du disque de compensation d'effort axial pour réduire sa masse tout en assurant sa résistance aux efforts centrifuges, ledit disque de compensation d'effort axial peut présenter une épaisseur décroissante vers une périphérie du disque. Cette épaisseur décroissante peut être obtenue par inclinaison de la face avant et/ou de la face arrière par rapport à un plan radial.

Ledit premier palier peut en particulier être situé entre le rouet et le disque de compensation d'effort axial, de manière à faciliter ainsi la lubrification du premier palier avec le fluide pressurisé poussant sur la face avant du disque de compensation d'effort axial, ce qui permet de maintenir un arrangement comparativement simple de la pompe centrifuge, fiable et à faible poids et encombrement.

Pour la même raison, ledit premier palier peut aussi être relié à une dérivation de fluide sous pression prélevé en aval du rouet pour la lubrification du premier palier avec du fluide provenant de la pompe. Cette dérivation peut être celle servant à alimenter le disque de compensation d'effort axial ou une autre. En outre, ladite pompe centrifuge peut comporter une pompe auxiliaire, de préférence actionnée par l'arbre rotatif de la pompe centrifuge, pour l'évacuation dudit fluide du premier palier. En particulier, la pompe auxiliaire peut prendre la forme d'une contrepompe aux aubes formées sur une face arrière du rouet de la pompe centrifuge. Ceci permet d'orienter l'évacuation du fluide, en particulier son retour à un flux principal de la pompe.

Ledit premier palier peut notamment être un palier à roulement, offrant ainsi une très faible résistance à la rotation de l'arbre, même à des très grandes vitesses de rotation.

La pompe centrifuge peut notamment être configurée pour pomper un fluide qui soit un fluide cryogénique et/ou un propergol. La compacité et légèreté de cette pompe centrifuge est en effet particulièrement utile dans un système d'alimentation en propergols liquides.

L'au moins un joint d'étanchéité dynamique peut notamment être relié à une source de fluide inerte, de manière à créer une barrière fluide autour de l'arbre rotatif. Une telle barrière fluide permet d'obtenir une étanchéité particulièrement élevé.

La présente divulgation concerne aussi une turbopompe comprenant la pompe centrifuge susmentionnée et une turbine, notamment une turbine axiale, avec une roue de turbine solidaire de l'arbre rotatif de la pompe centrifuge, l'au moins un joint d'étanchéité dynamique s'interposant entre le disque de compensation d'effort axial et ladite roue de turbine. Une turbine représente un moyen compact et léger d'assurer l'entraînement de la pompe centrifuge. En même temps, grâce au joint d'étanchéité dynamique et au disque de compensation d'effort axial, il est possible de séparer les fluides de travail de la pompe et de la turbine.

Cette étanchéité entre le fluide propulsant la turbine et le fluide pompé par la pompe est particulièrement importante quand ces gaz et ce fluide sont chimiquement réactifs entre eux. Notamment, dans les turbopompes d'alimentation des moteurs-fusées en propergol, les gaz de propulsion de la turbine sont normalement réducteurs, ce qui imposera en général une étanchéité absolue dans les turbopompes à oxydant pour séparer le fluide oxydant pompé des gaz réducteurs propulsant la turbine.

L'invention concerne également un moteur-fusée comprenant au moins une turbopompe selon l'invention pour l'alimentation d'au moins une chambre propulsive dudit moteur-fusée en au moins un propergol, p.ex. un fluide réducteur et/ou un fluide oxydant.

Grâce à la compacité, légèreté, fiabilité et simplicité de la turbopompe de l'invention, son application dans les moteurs-fusées est particulièrement avantageuse, en particulier dans les moteurs-fusées de très faible poussée, et ceux à propergols cryogéniques.

### Brève description des dessins

L'invention sera bien comprise et ses avantages apparaîtront mieux, à la lecture de la description détaillée qui suit, de modes de réalisation représentés à titre d'exemples non limitatif. La description se réfère aux dessins annexés sur lesquels :
- la figure 1 est une vue en coupe longitudinale d'une turbopompe de l'état de la technique pour l'alimentation d'une chambre de combustion de moteur-fusée en propergol réducteur cryogénique liquide,
- la figure 2 est une vue en coupe longitudinale d'une turbopompe de l'état de la technique pour l'alimentation d'une chambre de combustion de moteur-fusée en propergol oxydant cryogénique liquide,
- la figure 3 est une vue en coupe d'une turbopompe, suivant un exemple ne faisant pas partie de l'invention, pour l'alimentation d'une chambre de combustion de moteur-fusée en propergol réducteur cryogénique liquide,
- la figure 4 est une vue en coupe d'une turbopompe, suivant un mode de réalisation de l'invention, pour l'alimentation d'une chambre de combustion de moteur-fusée en propergol oxydant cryogénique liquide,
- les figures 5,6, et 7 sont des vues en coupe axiale de variantes des disques de compensation d'effort axial des turbopompes des figures 3 et 4, et
- la figure 8 est une vue schématique d'un moteur-fusée avec les turbopompes des figures 3 et 4.

### Description détaillée de l'invention

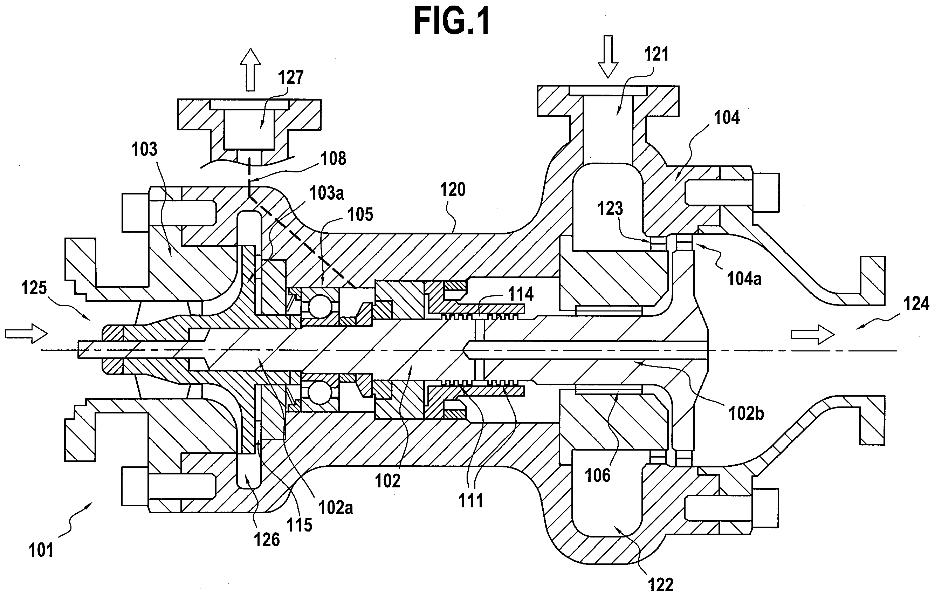

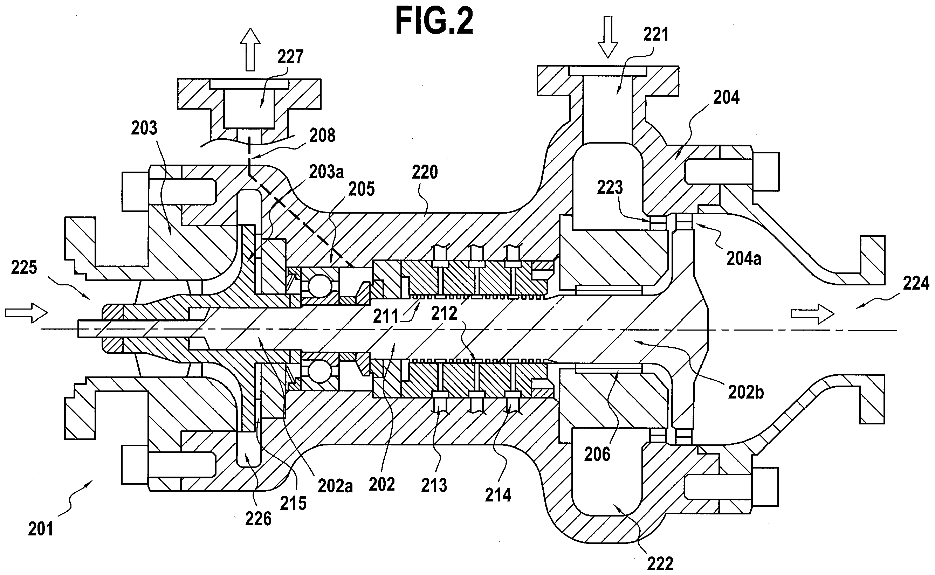

Afin de mieux comprendre l'invention, on commence par décrire les deux turbopompes 101 et 201 de l'état de la technique représentées sur les figures 1 et 2 et correspondant à celles divulguées dans la demande de brevet français FR 2 964 425 A1. Dans le carter 120 de la turbopompe 101 à propergol réducteur illustrée dans la figure 1, un arbre rotatif 102 relie le rouet 103a de la pompe centrifuge 103 à la roue 104a de la turbine axiale 104. Une première extrémité 102a de l'arbre 102 est solidaire du rouet 103a de la pompe 103, et une deuxième extrémité 102b de l'arbre 102, opposée à ladite première extrémité 102a, est solidaire de la roue 104a de la turbine 104. Le carter 120 présente, autour de la turbine 104, un conduit radial d'admission 121, un tore d'admission 122, un distributeur 123 et un conduit axial d'échappement 124. Autour de la pompe 103, le carter 120 présente un passage axial d'admission 125, une volute 126 et une trompette d'échappement 127. Ainsi la rotation du rotor 104a de la turbine 104, propulsée par l'expansion de gaz entrant dans la turbine 104 par le conduit radial d'admission 121, le tore d'admission 122 et le distributeur 123 et sortant par un conduit axial d'échappement 124 entraine la rotation de l'arbre 102 et du rouet 103a de la pompe centrifuge 103. Le propergol réducteur, impulsé par le rouet 103a, entre dans la pompe 103 par le passage axial d'admission 125 et sort par la volute 126 et la trompette d'échappement 127.

L'arbre 102 est soutenu dans le carter 120 par un premier et un deuxième palier 105, 106. Le premier palier 105 est un palier à roulements lubrifié par un faible débit 108 de propergol liquide sous pression prélevé à la trompette 127. Ce fluide est ensuite évacué vers la volute 126 par une contrepompe 115 comportant des aubes formées sur une face arrière du rotor 103a de la pompe 103. Le deuxième palier 106, soutenant la deuxième extrémité 102b de l'arbre 102 à proximité de la turbine 104, est un palier hydrodynamique dans lequel un mince filet de gaz de propulsion de la turbine 104, prélevé au niveau de son tore d'admission 122, prévient le contact direct entre surfaces solides opposées. Alternativement, ce gaz alimentant le deuxième palier 106 pourrait être prélevé ailleurs, par exemple, en sortie d'un circuit régénératif d'une chambre propulsive, si la température des gaz de propulsion de la turbine est trop élevée.

Pour séparer le gaz du palier hydrodynamique 106 du liquide du palier à roulements 105, quand la turbopompe 101 est en fonctionnement, cette turbopompe 101 comporte des joints d'étanchéité dynamique 111 autour de l'arbre 102, entre le palier à roulements 105 et le palier hydrodynamique 106, avec un point de purge 114 vers le conduit axial d'échappement 124.

La turbopompe 201 à propergol oxydant illustrée dans la figure 2 présente aussi un arbre rotatif 202 reliant le rouet 203a de la pompe centrifuge 203 à la roue 204a de la turbine axiale 204. Comme dans la turbopompe 101, une première extrémité 202a de l'arbre 202 est solidaire du rouet 203a de la pompe 203, et une deuxième extrémité 202b de l'arbre 202, opposée à ladite première extrémité 202a, est solidaire de la roue 204a de la turbine 204.

Dans la turbopompe 201, le carter 220 présente aussi un conduit radial d'admission 221, un tore d'admission 222, un distributeur 223 et un conduit axial d'échappement 224 autour de la turbine 204, ainsi qu'un passage axial d'admission 225, une volute 226 et une trompette d'échappement 227 autour de la pompe 203. Pompe 203 et turbine 204 fonctionnent de manière analogue à celles de la turbopompe 101, et, comme dans la turbopompe 101, l'arbre 202 est soutenu dans le carter 220 par un premier palier 205 qui est un palier à roulements, et un deuxième palier 206 qui est un palier hydrodynamique. Le premier palier 205 est aussi lubrifié par un faible débit 208 de propergol liquide sous pression prélevé à la trompette 227 et ensuite évacué vers la volute 226 par une contrepompe 215 comportant des aubes formées sur une face arrière du rotor 203a de la pompe 203, tandis que, dans le deuxième palier 206, un mince filet de gaz de propulsion de la turbine 204, prélevé au niveau de son tore d'admission 222, prévient aussi le contact direct entre surfaces solides opposées. Alternativement, ce gaz alimentant le deuxième palier 206 pourrait être prélevé ailleurs, par exemple, en sortie d'un circuit régénératif d'une chambre propulsive, si la température des gaz de propulsion de la turbine est trop élevée.

Comme dans la turbopompe 101 à propergol réducteur, cette turbopompe 201 à propergol oxydant comporte des joints d'étanchéité dynamique 211 autour de l'arbre 202, entre le palier à roulements 205 et le palier hydrodynamique 206. Toutefois, dans la turbopompe à oxydant 201, il est encore plus important d'éviter les fuites du propergol pompé par la pompe 203 vers la turbine 204, puisque les gaz de propulsion de la turbine 204 sont normalement réducteurs et pourraient réagir violemment avec le propergol oxydant pompé par la pompe 203.

Afin d'éviter le contact du débit 208 de fluide oxydant avec le fluide réducteur, la turbopompe 201 présente aussi un point d'injection 212 d'un fluide inerte, tel que, par exemple, de l'hélium, et des points de purge de fluide oxydant et de fluide réducteur 213, 214 respectivement d'un côté et de l'autre du point d'injection 212. De cette manière une barrière fluide est crée entre les fluides oxydant et réducteur.

Pendant le fonctionnement de ces turbopompes 101 et 201 de l'état de la technique, les paliers à roulements 105, 205 sont soumis à des charges axiales très considérables. Or, ceci présente l'inconvénient de dissiper une énergie importante, augmentant les besoins de lubrification de ces paliers 105, 205 et diminuant le rendement des turbopompes. En outre, le surdimensionnement des paliers 105, 205 va à rencontre des souhaits de compacité des turbopompes.

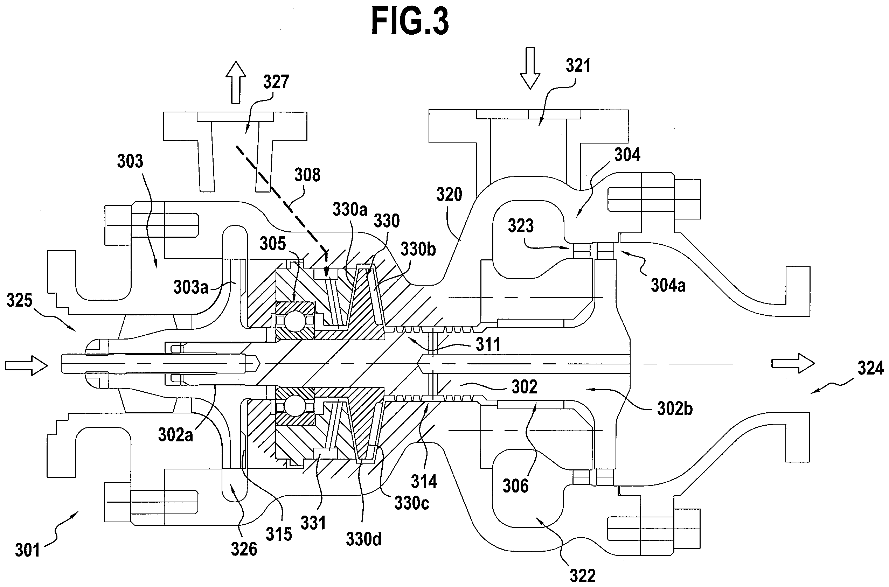

Dans un exemple ne faisant pas partie de l'invention, illustré sur la figure 3, la turbopompe 301, qui est une turbopompe à propergol réducteur, et plus spécifiquement peut être une turbopompe cryogénique à hydrogène liquide, comporte aussi, comme les turbopompes précédentes de l'état de la technique, une pompe centrifuge 303 et une turbine axiale 304 avec un carter commun 320 et un arbre rotatif commun 302 reliant le rouet 303a de la pompe centrifuge 303 à la roue 304a de la turbine axiale 304. Une première extrémité 302a de l'arbre 302 est solidaire du rouet 303a, et une deuxième extrémité 302b de l'arbre 302, opposée à ladite première extrémité 302a, est solidaire de la roue 304a. Le rouet 303a présente un diamètre dᵣ.

Le carter 320 présente aussi un conduit radial d'admission 321, un tore d'admission 322, un distributeur 323 et un conduit axial d'échappement 324 autour de la turbine 304, ainsi qu'un passage axial d'admission 325, une volute 326 et une trompette d'échappement 327 autour de la pompe 303. Comme dans les exemples précédents, l'arbre 302 est soutenu dans le carter 320 par un premier palier 305, qui est un palier à roulements, et un deuxième palier 306, qui est un palier hydrodynamique dans lequel un mince filet de gaz de propulsion de la turbine 304, prélevé au niveau de son tore d'admission 322, évite le contact direct entre surfaces solides opposées. Alternativement, toutefois, d'autres types de paliers peuvent être envisagés pour l'un comme pour l'autre. Le premier palier 305 est plus proche du rouet 303a de la pompe 303, tandis que le deuxième palier 306 est plus proche de la roue 304a de la turbine 304.

Bien que dans l'exemple illustré le gaz pour le palier hydrodynamique 306 soit prélevé au niveau du tore d'admission 322, dans une alternative il pourrait être prélevé ailleurs, par exemple, si la température des gaz de propulsion de la turbine est trop élevée, en sortie d'un circuit régénératif d'une chambre propulsive.

Des joints d'étanchéité dynamique 311 autour de l'arbre 302, situé entre le premier palier 305 et le deuxième palier 306, et présentant un point de purge 314 vers le conduit axial d'échappement 324, séparent la pompe 303 de la turbine 304. Dans l'exemple illustré, ces joints d'étanchéité 311 sont des joints à labyrinthes. Toutefois, d'autres types de joints tels que, par exemple, les joints à bagues flottantes, les joints segmentés, ou les joints à brosse, peuvent également être envisagés.

La pompe 303 et la turbine 304 fonctionnent de manière analogue à celles des turbopompes 101 et 201 de l'état de la technique. Toutefois, dans cette turbopompe 301, la pompe 301 comporte aussi, entre les joints d'étanchéité dynamique 311 et le premier palier 305, un disque 330, solidaire de l'arbre rotatif 302, pour compenser les efforts axiaux exercés par le rouet 303a de pompe et la roue 304a de turbine sur cet arbre rotatif 302. Ainsi, ce disque 330 présente une face avant 330a, sensiblement lisse, en regard du premier palier 305, et une face arrière 330b en regard des joints d'étanchéité dynamique 311, présentant des ailettes radiales 330c. La périphérie 330d de ce disque 330 présente un diamètre d_{d} pouvant être, par exemple, compris entre 70% et 100% du diamètre dᵣ du rouet 303a. Le carter 320 présente un passage 331, connecté à la trompette d'échappement 327 et débouchant entre le premier palier 305 et la face avant 330a du disque 330. Afin de limiter la masse du disque 330 tout en assurant sa résistance aux efforts centrifuges, son épaisseur est décroissante vers la périphérie 330d, les faces avant 330a et arrière 330b présentant une forme sensiblement tronconique.

En fonctionnement, un débit 308 de propergol liquide sous pression est ainsi prélevé à la trompette 327 et réinjecté entre le premier palier 305 et la face avant 330a du disque 330. Une partie de ce débit 308 sert à lubrifier premier palier 305 et est ensuite évacuée vers la volute 326 par une contrepompe 315 comportant des aubes formées sur une face arrière du rouet 303a de la pompe 303. Le reste du débit 308, toutefois, circule autour du disque 330. Sur sa face avant 330a, le fluide exerce une pression considérable dans le sens de la turbine 304. Toutefois, sur la face arrière 330b, la rotation des ailettes 330c diminue sensiblement la pression exercée par le fluide en sens opposé. Ainsi, la différence de pression entre les deux faces 330a et 330b pousse le disque 330 dans le sens de la turbine 304, compensant ainsi au moins partiellement la traction exercé par le rouet 303a sur l'arbre 302. Après avoir contourné le disque 330, ce fluide est aspiré vers le point de purge 314, à proximité duquel sa pression descend en-dessous du point de vaporisation, provoquant ainsi un blocage gazeux renforçant l'étanchéité entre la pompe 303 et la turbine 304.

Ainsi, le disque 330 contribue en même temps à compenser les efforts axiaux sur l'arbre 302 et à assurer l'étanchéité entre la pompe 303 et la turbine 304.

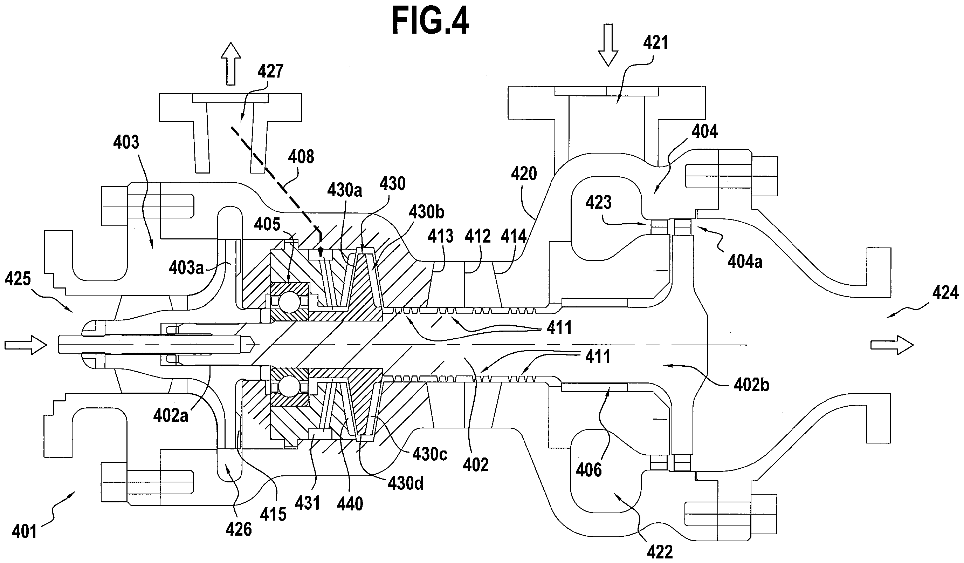

Dans un mode de réalisation de l'invention, illustré sur la figure 4, la turbopompe 401 est une turbopompe à propergol oxydant, et plus spécifiquement peut être une turbopompe cryogénique à oxygène liquide. Elle comporte aussi, comme les turbopompes précédentes, une pompe centrifuge 403 et une turbine axiale 404 avec un carter commun 420 et un arbre rotatif commun 402 reliant le rouet 403a de la pompe centrifuge 403 à la roue 404a de la turbine axiale 404. Une première extrémité 402a de l'arbre 402 est solidaire du rouet 403a, et une deuxième extrémité 402b de l'arbre 402, opposée à ladite première extrémité 402a, est solidaire de la roue 404a. Le rouet 403a présente un diamètre dᵣ.

Le carter 420 présente aussi un conduit radial d'admission 421, un tore d'admission 422, un distributeur 423 et un conduit axial d'échappement 424 autour de la turbine 404, ainsi qu'un passage axial d'admission 425, une volute 426 et une trompette d'échappement 427 autour de la pompe 403. Comme dans les exemples précédents, l'arbre 402 est soutenu dans le carter 420 par un premier palier 405, qui est un palier à roulements, et un deuxième palier 406, qui est un palier hydrodynamique dans lequel un mince filet de gaz de propulsion de la turbine 404, prélevé au niveau de son tore d'admission 422, évite le contact direct entre surfaces solides opposées. Alternativement, toutefois, d'autres types de paliers peuvent être envisagés pour l'un comme pour l'autre. Le premier palier 405 est plus proche du rouet 403a de la pompe 403, tandis que le deuxième palier 406 est plus proche de la roue 404a de la turbine 404.

Bien que dans le mode de réalisation illustré le gaz pour le palier hydrodynamique 406 soit prélevé au niveau du tore d'admission 422, dans une alternative il pourrait être prélevé ailleurs, par exemple, si la température des gaz de propulsion de la turbine est trop élevée, en sortie d'un circuit régénératif d'une chambre propulsive.

L'utilisation d'un palier hydrodynamique présente, dans ce mode de réalisation, les mêmes avantages que dans l'exemple précédent ne faisant pas partie de l'invention. Comme dans la turbopompe 201 de l'état de la technique illustrée sur la figure 2, il est toutefois important, dans cette turbopompe à fluide oxydant 401, d'assurer une très bonne étanchéité entre les gaz du palier hydrodynamique 406, et le fluide oxydant pompé par la pompe 403, puisque les gaz du palier hydrodynamique sont normalement des gaz de combustion riches en ergol réducteur ou même un ergol réducteur vaporisé en sortie d'un circuit régénératif d'une chambre propulsive. Pour obtenir cette plus grande étanchéité, cette turbopompe 401 comporte, entre le palier à roulements 405 et le palier hydrodynamique 406, à part des joints d'étanchéité dynamique 411 autour de l'arbre 402, un point d'injection 412 d'un fluide inerte, tel que, par exemple, de l'hélium, et des points de purge de fluide oxydant et de gaz réducteurs 413, 414 respectivement d'un côté et de l'autre du point d'injection 412. De celle manière une barrière fluide est crée entre le fluide oxydant et les gaz réducteurs.

Comme dans l'exemple précédent ne faisant pas partie de l'invention, la pompe 401 comporte aussi, entre les joints d'étanchéité dynamique 411 et le premier palier 405, un disque 430, solidaire de l'arbre rotatif 402, pour compenser les efforts axiaux exercés par le rouet 403a de pompe et la roue 404a de turbine sur cet arbre rotatif 402. Ainsi, ce disque 430 présente une face avant 430a, sensiblement lisse, en regard du premier palier 405, et une face arrière 430b en regard des joints d'étanchéité dynamique 411, présentant des ailettes radiales 430c. La périphérie 430d de ce disque 430 a un diamètre d_{d} pouvant être, par exemple, compris entre 70% et 100% du diamètre dᵣ du rouet 403a. Comme dans l'exemple précédent ne faisant pas partie de l'invention, l'épaisseur du disque 430 est décroissante vers la périphérie 430d, les faces avant 430a et arrière 430b présentant une forme sensiblement tronconique.

Le carter 420 présente un passage 431, connecté à la trompette d'échappement 427 et débouchant entre le premier palier 405 et la face avant 430a du disque 430. En outre, le carter 420 présente aussi, en regard de la face avant 430a du disque 430, des ailettes 440 sensiblement radiales servant à éviter que le fluide injecté à travers le passage 431 tourne avec la face avant 430a du disque 430. A cause de la plus forte masse volumique de l'oxygène liquide, son entraînement en rotation conduirait à une sensiblement plus grande augmentation de la pression statique, sur la face avant 430a, radialement vers la périphérie 430d du disque 430 sur la face avant 430a du disque 430, réduisant sensiblement l'efficacité globale du disque 430 pour compenser les efforts axiaux sur l'arbre 402. En effet, à cause de cette montée en pression statique, le fluide arrivera aux joints d'étanchéité 411 à une pression statique plus élevée. Or, pour limiter le débit de fuite à travers ces joints 411, il convient de limiter cette pression statique, notamment afin de favoriser la vaporisation du fluide en amont des joints 411.

En fonctionnement, un débit 408 de propergol liquide sous pression est ainsi prélevé à la trompette 427 et réinjecté entre le premier palier 405 et la face avant 430a du disque 430. Comme dans l'exemple précédent ne faisant pas partie de l'invention, une partie de ce débit 408 sert à lubrifier le premier palier 405 et est ensuite évacuée vers la volute 426 par une contrepompe 415 comportant des aubes formées sur une face arrière du rouet 403a de la pompe 403. Le reste du débit 408 circule autour du disque 430. Sur sa face avant 430a, le fluide exerce une pression considérable dans le sens de la turbine 404, les ailettes statiques 440 freinant son entraînement en rotation par le disque 430. Toutefois, sur la face arrière 430b, la rotation des ailettes 430c diminue sensiblement la pression exercée par le fluide en sens opposé. Ainsi, la différence de pression entre les deux faces 430a et 430b pousse le disque 430 dans le sens de la turbine 404, compensant ainsi au moins partiellement la traction exercé par le rouet 403a sur l'arbre 402. Après avoir contourné le disque 430, ce fluide est aspiré vers le point de purge 413, à proximité duquel sa pression descend en-dessous du point de vaporisation, provoquant ainsi un blocage gazeux renforçant l'étanchéité entre la pompe 403 et la turbine 404.

Ainsi, le disque 430 contribue en même temps à compenser les efforts axiaux sur l'arbre 402 et à assurer l'étanchéité entre la pompe 403 et la turbine 404.

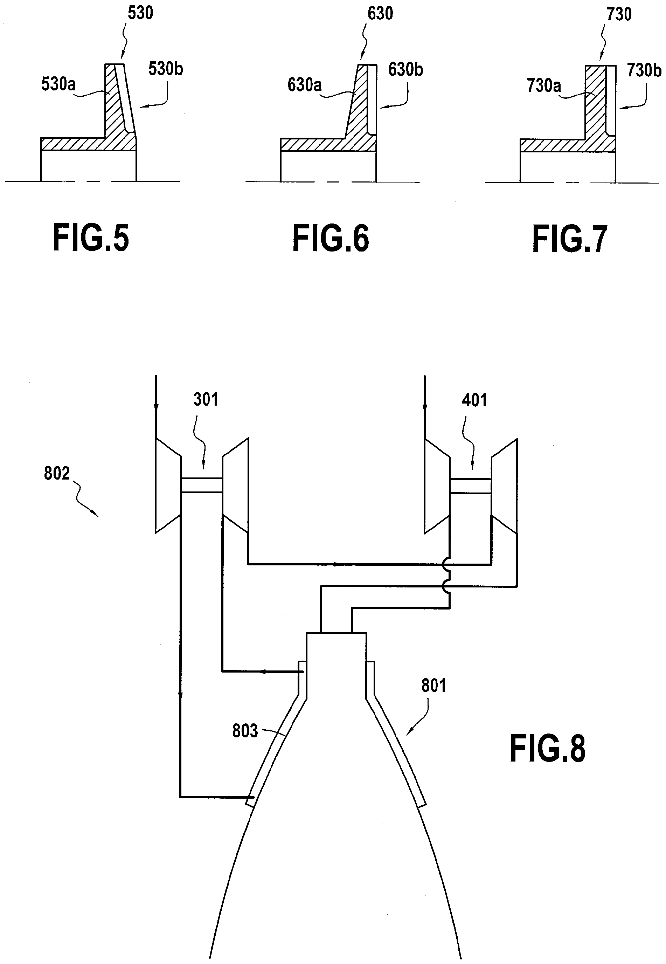

Bien que les disques 330,430 de compensation d'efforts axiaux des turbopompes 301, 401 présentent des faces avant 330a,430a et arrière 330b,430b sensiblement tronconiques, alternativement au moins l'une de ces faces peut être droite. Ainsi, dans le disque 530 suivant la variante illustrée sur la figure 5, la face avant 530a est droite, et seulement la face arrière 530b est inclinée. Par contre, dans le disque 630 suivant la variante illustrée sur la figure 7, la face avant 630a est droite, et seulement la face arrière 630b est inclinée. Finalement, le disque 730 illustré sur la figure 7, présente des faces avant et arrière 730a,730b droites, et une épaisseur donc constante. Chacun de ces disques, qui présentent chacun une face avant lisse et une face arrière avec des ailettes radiales, peut être utilisé en remplacement des disques 330,430 des turbopompes 301,401.

Les turbopompes 301 et 401 peuvent en particulier être utilisées pour alimenter en propergols une chambre propulsive 801 d'un moteur-fusée 802, comme illustré sur la figure 8. Elles sont particulièrement adaptées pour l'alimentation de moteurs-fusées de faible poussée. Le moteur-fusée 802 est un moteur-fusée à cycle de détente, dans lequel les turbines 304, 404 des turbopompes 301, 401 sont actionnées par l'hydrogène vaporisé après son passage à travers un échangeur de chaleur régénératif 803 autour de la chambre propulsive 801. Toutefois, d'autres types de moteurs-fusées peuvent être alimentés par de telles turbopompes, y compris des moteurs-fusées dans lesquels les turbines sont actionnées par des gaz de combustion générés dans un générateur de gaz.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. En particulier, bien que la présente invention ait été décrite en se référant à des turbopompes, et plus spécifiquement à des turbopompes à turbine axiale, elle est également applicable à d'autres types de pompes actionnées par d'autres moyens qu'une turbine axiale. Des caractéristiques de différents modes de réalisation peuvent aussi être combinées entre elles. Par conséquent, la description et les dessins doivent être considérés dans un sens illustratif plutôt que restrictif.

## Revendications

1. Pompe centrifuge (403) comprenant au moins :
un rouet (403a),
un arbre rotatif (402) solidaire dudit rouet (403a),
un carter (420) avec un passage axial d'admission (425),
au moins un premier palier (405) soutenant ledit arbre rotatif (402) dans ledit carter (420), et
au moins un joint d'étanchéité dynamique (411) autour de l'arbre rotatif (402), ledit rouet (403a) étant situé entre le joint d'étanchéité dynamique (411) et le passage axial d'admission (425) de la pompe (403), laquelle pompe centrifuge comprend aussi, entre le rouet (403a) et l'au moins un joint d'étanchéité dynamique (411), un disque de compensation d'effort axial (430), solidaire de l'arbre (402), et présentant un diamètre supérieur à 70% d'un diamètre du rouet (403a), avec une face avant (430a) orientée vers le rouet (403a) et reliée à une dérivation de fluide sous pression prélevé en aval de la pompe (403), et une face arrière (430b) orientée vers l'au moins un joint d'étanchéité dynamique (411) et présentant des ailettes (430c) à orientation au moins partiellement radiale, et **caractérisée en ce qu'**elle comprend en outre, en regard de la face avant (430a) du disque de compensation d'effort axial (430), des ailettes (440) solidaires du carter (420), avec une orientation au moins partiellement radiale.

2. Pompe centrifuge (403) selon la revendication 1, dans laquelle ledit disque de compensation axial (430) présente une épaisseur décroissante vers une périphérie (430d) du disque (430).

3. Pompe centrifuge (403) selon l'une quelconque des revendications 1 ou 2, dans laquelle ledit premier palier (405) est situé entre le rouet (403a) et le disque de compensation d'effort axial (430).

4. Pompe centrifuge (403) selon l'une quelconque des revendications 1 à 3, dans laquelle ledit premier palier (405) est aussi relié à une dérivation de fluide sous pression prélevé en aval du rouet (403a) pour la lubrification du premier palier (405) avec du fluide provenant de la pompe (403).

5. Pompe centrifuge (403) selon l'une quelconque des revendications 1 à 4, configurée pour pomper un fluide cryogénique.

6. Pompe centrifuge (403) selon l'une quelconque des revendications 1 à 5, configurée pour pomper un propergol.

7. Turbopompe (401) comprenant une pompe centrifuge (403) selon l'une quelconque des revendications 1 à 6 et une turbine (404) avec une roue de turbine (404a) solidaire de l'arbre rotatif (402) de la pompe centrifuge (403), l'au moins un joint d'étanchéité dynamique (411) s'interposant entre le disque de compensation d'effort axial (430) et ladite roue de turbine (403a).

8. Turbopompe (401) selon la revendication 7, dans lequel ladite turbine (404) est une turbine axiale.

9. Moteur-fusée (802) comprenant au moins une chambre propulsive (801) et au moins une pompe centrifuge (401) selon l'une quelconque des revendications 1 à 6 pour l'alimentation en au moins un propergol de ladite au moins une chambre propulsive (801).

## Patentansprüche

1. Kreiselpumpe (403), umfassend mindestens:
ein Laufrad (403a),
eine Drehwelle(402), die mit dem Laufrad (403a) fest verbunden ist,
ein Gehäuse (420) mit einem axialen Einlassdurchgang (425),
mindestens ein erstes Lager (405), das die Drehwelle (402) in dem Gehäuse (420) lagert, und
mindestens eine dynamische Dichtung (411) um die Drehwelle (402),
wobei das Laufrad (403a) zwischen der dynamischen Dichtung (411) und dem axialen Einlassdurchgang (425) der Pumpe (403) angeordnet ist,
wobei die Kreiselpumpe zwischen dem Laufrad (403a) und der mindestens einen dynamischen Dichtung (411) auch eine axiale Kraftkompensationsscheibe (430) umfasst, die mit der Welle (402) fest verbunden ist und einen Durchmesser aufweist, der größer ist als 70 % eines Durchmessers des Laufrads (403a), mit einer vorderen Fläche (430a), die zum Laufrad (403a) gerichtet und mit einer Abzweigung für druckbeaufschlagtes Fluid verbunden ist, das stromabwärts von der Pumpe (403) entnommen wird, und mit einer hinteren Fläche (430b), die zu der mindestens einen dynamischen Dichtung (411) gerichtet ist und Schaufeln (430c) mit einer mindestens teilweise radialen Orientierung aufweist, und
**dadurch gekennzeichnet, dass** sie ferner gegenüber der vorderen Fläche (430a) der axialen Kraftkompensationsscheibe (430) Schaufeln (440), die mit dem Gehäuse (420) fest verbunden sind, mit einer mindestens teilweise radialen Orientierung umfasst.

2. Kreiselpumpe (403) nach Anspruch 1, wobei die axiale Kompensationsscheibe (430) eine Dicke aufweist, die zu einem Umfang (430d) der Scheibe (430) hin abnimmt.

3. Kreiselpumpe (403) nach einem der Ansprüche 1 oder 2, wobei das erste Lager (405) zwischen dem Laufrad (403a) und der axialen Kraftkompensationsscheibe (430) angeordnet ist.

4. Kreiselpumpe (403) nach einem der Ansprüche 1 bis 3, wobei das erste Lager (405) auch mit einer Abzweigung für druckbeaufschlagtes Fluid verbunden ist, das stromabwärts vom Laufrad (403a) entnommen wird, zur Schmierung des ersten Lagers (405) mit Fluid, das von der Pumpe (403) stammt.

5. Kreiselpumpe (403) nach einem der Ansprüche 1 bis 4, welche zum Pumpen von kryogenem Fluid ausgelegt ist.

6. Kreiselpumpe (403) nach einem der Ansprüche 1 bis 5, welche zum Pumpen von Treibstoff ausgelegt ist.

7. Turbopumpe (401), umfassend eine Kreiselpumpe (403) nach einem der Ansprüche 1 bis 6, und eine Turbine (404) mit einem Turbinenrad (404a), das fest mit der Drehwelle (402) der Kreiselpumpe (403) verbunden ist, wobei die mindestens eine dynamische Dichtung (411) zwischen der axialen Kraftkompensationsscheibe (430) und dem Turbinenrad (403a) angeordnet ist.

8. Turbopumpe (401) nach Anspruch 7, wobei die Turbine (404) eine axiale Turbine ist.

9. Raketentriebwerk (802), umfassend mindestens eine Treibkammer (801) und mindestens eine Kreiselpumpe (401) nach einem der Ansprüche 1 bis 6 zur Versorgung der mindestens einen Treibkammer (801) mit mindestens einem Treibstoff.

## Claims

1. A centrifugal pump (403) comprising at least:
. an impeller (403a);
. a rotary shaft (402) secured to said impeller (403a) ;
. a casing (420) having an axial admission passage (425);
. at least one first bearing (405) supporting said rotary shaft (402) in said casing (420); and
. at least one dynamic seal (411) around the rotary shaft (402), said impeller (403a) being situated between the dynamic seal (411) and the axial admission passage (425) of the pump (403); and
the centrifugal pump further comprising, between the impeller (403a) and at least one dynamic seal (411), an axial force compensation disk (430) secured to the shaft (402) and presenting a diameter greater than 70% of a diameter of the impeller (403a), with a front face (430a) facing towards the impeller (403a) and connected to a branch connection for fluid under pressure taken downstream from the pump (403), and a rear face (430b) facing towards at least one dynamic seal (411) and presenting fins (430c) that are oriented radially, at least in part; and being **characterized in that** it also comprises, facing the front face (430a) of the axial force compensation disk (430), fins (440) that are secured to the casing (420) and that have an orientation that is radial, at least in part.

2. A centrifugal pump (403) according to claim 1, wherein said axial compensation disk (330, 430) presents thickness that decreases towards a periphery (430d) of the disk (430).

3. A centrifugal pump (403) according to claim 1 or claim 2, wherein said first bearing (405) is situated between the impeller (403a) and the axial force compensation disk (430).

4. A centrifugal pump (403) according to any one of claims 1 to 3, wherein said first bearing (405) is also connected to a branch connection for fluid under pressure taken downstream from the impeller (403a) for lubricating the first bearing (405) with the fluid coming from the pump (403).

5. A centrifugal pump (403) according to any one of claims 1 to 4, configured to pump a cryogenic fluid.

6. A centrifugal pump (403) according to any one of claims 1 to 5, configured to pump a propellant.

7. A turbopump (401) comprising a centrifugal pump (403) according to any one of claims 1 to 6 and a turbine (404) with a turbine wheel (404a) secured to the rotary shaft (402) of the centrifugal pump (403), at least one dynamic seal (411) being interposed between the axial force compensation disk (430) and said turbine wheel (403a).

8. A turbopump (401) according to claim 7, wherein said turbine (404) is an axial turbine.

9. A rocket engine (802) including at least one thrust chamber (801) and at least one centrifugal pump (401) according to any one of claims 1 to 6 for feeding said at least one thrust chamber (801) with at least one propellant.
